(19) Europäisches Patentamt
European Patent Office
Office européen des brevets

(11) Veröffentlichungsnummer : **0 334 032 B1**

(12) # EUROPÄISCHE PATENTSCHRIFT

(45) Veröffentlichungstag der Patentschrift : **11.12.91 Patentblatt 91/50**

(51) Int. Cl.$^5$ : **C08F 2/30**, C08F 283/00, C09D 123/00, C09D 147/00

(21) Anmeldenummer : **89102964.7**

(22) Anmeldetag : **21.02.89**

(54) **Verfahren zur Herstellung von wässrigen Polymerisatdispersionen, die so erhältlichen Dispersionen und ihre Verwendung zur Herstellung von Beschichtungen.**

(30) Priorität : **26.02.88 DE 3806066**

(43) Veröffentlichungstag der Anmeldung : **27.09.89 Patentblatt 89/39**

(45) Bekanntmachung des Hinweises auf die Patenterteilung : **11.12.91 Patentblatt 91/50**

(84) Benannte Vertragsstaaten : **AT BE CH DE ES FR GB IT LI NL SE**

(56) Entgegenhaltungen :
**DE-A- 1 953 349**
**FR-A- 2 402 672**

(73) Patentinhaber : **BAYER AG**
**W-5090 Leverkusen 1 Bayerwerk (DE)**

(72) Erfinder : **Probst, Joachim, Dr.**
**Humperdinckstrasse 42**
**W-5090 Leverkusen (DE)**
Erfinder : **Pedain, Josef, Dr.**
**Haferkamp 6**
**W-5000 Köln 80 (DE)**
Erfinder : **Bömer, Bruno, Dr.**
**Max-Planck-Strasse 53**
**W-5060 Bergisch Gladbach 2 (DE)**
Erfinder : **Schmidt, Adolf, Dr.**
**Roggendorfstrasse 67**
**W-5000 Köln 80 (DE)**
Erfinder : **Wieczorrek, Wolfhart, Dipl.-Ing.**
**Egerstrasse 6**
**W-5000 Köln 90 (DE)**

**EP 0 334 032 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein neues Verfahren zur Herstellung von wäßrigen Dispersionen von Polymerisation olefinisch ungesättigter Monomerer in Gegenwart von Radikalbildnern und von Urethangruppen-aufweisenden Emulgatoren mit verzweigter Molekülstruktur, die so erhältlichen Dispersionen und ihre Verwendung zur Herstellung von Beschichtungen.

Es ist bekannt, wäßrige Dispersionen von Polymerisaten aus olefinisch ungesättigten Monomeren in Gegenwart von wasserlöslichen bzw. wasserdispergierbaren Oligourethanen mit anionischem oder kationischem Charakter herzustellen (DE-A-1953349).

Es zeigt sich jedoch, daß die dort beschriebenen Oligourethane im allgemeinen zur Emulgierung von hydrophoben Monomeren und der entstehenden Polymeren nur unzureichend geeignet sind. Um stabile Dispersionen ohne nennenswerten Polymerausfall und Sedimentbildung zu erhalten, muß in vielen Fällen ein niedermolekularer Emulgator zusätzlich zugegeben werden. Der Grund für das schlechte Emulgierverhalten dieser Oligourethane ist in ihrem strukturellen Aufbau begründet. Bei den gemäß DE-A-1953349 als Emulgatoren eingesetzten Oligourethanen handelt es sich nämlich um Verbindungen mit linearer Molekülstruktur, die unter Mitverwendung von überwiegend difunktionellen (potentiell) ionischen Aufbaukomponenten hergestellt worden sind, und in denen demzufolge die hydrophilen ionischen Zentren innerhalb der Kette eingebaut sind.

Es war daher die der Erfindung zugrunde liegende Aufgabe, ein neues Verfahren zur Herstellung von wäßrigen Polymerisatdispersionen zur Verfügung zu stellen, welches nicht mit den genannten Nachteilen behaftet ist.

Diese Aufgabe konnte mit dem nachstehend näher beschriebenen erfindungsgemäßen Verfahren gelöst werden. Bei diesem neuen Verfahren werden spezielle Oligourethane mit verzweigter Molekülstruktur and endständig eingebauten hydrophilen Zentren als Emulgatoren verwendet.

Gegenstand der Erfindung ist ein Verfahren zur Herstellung von wäßrigen Dispersionen von Polymerisaten durch Polymerisation von olefinisch ungesättigten Monomeren in wäßrigem Medium in Gegenwart von Radikalbildnern und unter Verwendung von hydrophil modifizierten, Urethangruppen-aufweisenden Emulgatoren eines unter 30.000 liegenden mittleren Molekulargewichts, dadurch gekennzeichnet, daß man als Urethangruppen-aufweisende Emulgatoren Oligourethane mit verzweigter Molekülstruktur verwendet, die

(i) aus organischen Polyisocyanaten (a) und organischen Verbindungen mit gegenüber Isocyanatgruppen reaktionsfähigen Gruppen (b) und gegebenenfalls weiteren, Isocyanatgruppen oder gegenüber Isocyanatgruppen reaktionsfähige Gruppen aufweisenden Verbindungen unter Mitverwendung von hydrophile Gruppen oder in hydrophile Gruppen überführbare Gruppen aufweisenden, im Sinne der Isocyanat-Additionsreaktion mono- und gegebenenfalls difunktionellen Aufbaukomponenten (c) unter gegebenenfalls anschließend erfolgender Überführung von potentiellen hydrophilen Gruppen in hydrophile Gruppen mit der Maßgabe hergestellt worden sind, daß Komponenten (a) und/oder (b) mitverwendet werden, die im Sinne der Isocyanat-Additionsreaktion höher als difunktionell sind, wobei im Falle der Mitverwendung difunktioneller Aufbaukomponenten (c) das Molverhältnis der monofunktionellen (potentiell) hydrophilen Aufbaukomponenten (c) zu den entsprechenden difunktionellen Aufbaukomponenten (c) bei mindestens 2 : 1 liegt, und die

(ii) einen, die Löslichkeit oder Dispergierbarkeit in Wasser gewährleistenden Gehalt an chemisch eingebauten hydrophilen Zentren aufweisen, die ausschließlich oder überwiegend endständig angeordnet sind, mit der Maßgabe, daß im statistischen Mittel pro Molekül mindestens 2,2 endständig eingebaute hydrophile Gruppierungen vorliegen.

Gegenstand der Erfindung sind auch die so erhältlichen Dispersionen und ihre Verwendung zur Herstellung von Beschichtungen auf beliebigen Substraten.

Bei den erfindungswesentlichen Emulgatoren handelt es sich um Oligourethane eines, aus der Stöchiometrie der Ausgangsmaterialien berechenbaren mittleren Molekulargewichts von unter 30.000, vorzugsweise von 1.500 bis 20.000. Die Oligourethane weisen eine verzweigte Molekülstruktur auf. Dies bedeutet, daß bei ihrer Herstellung Aufbaukomponente mitverwendet werden, die im Sinne der Isocyanat-Additionsreaktion höher als difunktionell sind. Außerdem weisen die Oligourethane (neben gegebenenfalls zusätzlich innerhalb der Kette eingebauten hydrophilen Zentren) endständig eingebaute hydrophile Gruppierungen auf, wobei im statistischen Mittel pro Molekül mindestens 2,2 derartige endständige hydrophile Gruppierungen vorliegen.

Unter "hydrophilen Gruppierungen" sind hierbei folgende Gruppen zu verstehen :

a) anionische Salzgruppen wie Carboxylat- oder Sulfonatgruppen ;
b) kationische Salzgruppen wie temäre oder quatemäre Ammoniumgruppen oder ternäre Sulfoniumgrup-

pen ;

c) hydrophile Polyetherketten, deren Kettenglieder zumindest zu 50 Gew.-% aus Ethylenoxideinheiten und zum Rest vorzugsweise aus Propylenoxideinheiten bestehen.

Die ionischen hydrophilen Gruppen sind gegenüber den unter c) genannten nicht-ionischen hydrophilen Gruppen bevorzugt. Besonders bevorzugt handelt es sich bei den hydrophilen Gruppen um Carboxylatgruppen.

Die Oligourethane müssen auf jeden Fall einen Gehalt an hydrophilen Gruppen aufweisen, der ihrer Löslichkeit bzw. Dispergierbarkeit in Wasser gewährleistet.

Vorzugsweise weisen die Oligourethane einen Gehalt an endständig eingebauten ionischen Gruppen von 7,3 bis 400, insbesondere von 11 bis 300 Milliäquivalenten pro 100 g auf.

Die Herstellung der Oligourethane erfolgt nach den bekannten Methoden der Polyurethanchemie. Ausgangsmaterialien sind

a) organische Polyisocyanate, vorzugsweise des Molekulargewichtsbereichs 168-1.000,
b) organische Verbindungen mit gegenüber Isocyanatgruppen reaktionsfähigen Gruppen des Molekulargewichtsbereichs 60-10.000, vorzugsweise 62-3.000, und
c) Aufbaukomponenten mit hydrophilen Gruppen der oben genannten Art bzw. mit in derartige Gruppen überführbaren potentiellen hydrophilen Gruppen.

Geeignete organische Polyisocyanate a) sind beispielsweise 4,4'-Diisocyanatodiphenylmethan, 2,4- und-/oder 2,6-Diisocyanatotoluol, 4,4'-Dicyclohexylmethan, 1-Isocyanato-3,3,5-trimethyl-5-isocyanatomethyl-cyclohexan (IPDI), 1,6-Diisocyanatohexan (HDI), Isocyanuratgruppenaufweisende Polyisocyanate, wie z.B. das im wesentlichen aus N,N',N''-Tris-(6-isocyanatohexyl)-isocyanurat und gegenbenenfalls seinen höheren Homologen bestehende, durch Trimerisierung eines Teils der Isocyanatgruppen von HDI erhältliche Polyisocyanat, Urethangruppenaufweisende Polyisocyanate, wie beispielsweise das Umsetzungsprodukt von 1 Mol Trimethylolpropan mit 3 Mol IPDI oder mit 3 Mol 2,4-Diisocyanatotoluol oder auch Biuretpolyisocyanate, wie beispielsweise das im wesentlichen aus N,N',N''-Tris-(6-isocyanatohexyl)-biuret und seinen höheren Homologen bestehende Biuretpolyisocyanat auf Basis von HDI. Beliebige Gemische derartiger Polyisocyanate können ebenfalls als Komponente a) bei der Herstellung der Oligourethane verwendet werden.

Bei den mit gegenüber Isocyanatgruppen reaktionsfähigen Gruppen b) handelt es sich vorzugsweise um Verbindungen, die keine (potentiell) hydrophilen Gruppen der oben genannten Art aufweisen, und die mindestens 1, vorzugsweise 2-8, und besonders bevorzugt 2-4, gegenüber Isocyanatgruppen reaktionsfähige Gruppen tragen. Beispiele sind :

b1) die aus der Polyurethanchemie an sich bekannten Polyester- oder Polyetherpolyole, die vorzugsweise ein aus der Funktionalität und dem Hydroxylgruppengehalt berechenbares Molekulargewicht von 400-10000, vor weise 400-3000 aufweisen und die beispielsweise im "Kunststoffhandbuch", Band 7, "Polyurethane", herausgegeben von Dr. Günter Oertel, Carl Hanser-Verlag München, Wien (1983), auf Seiten 42 bis 61 beschrieben sind, und die gegebenenfalls durch Umsetzung mit unterschüssigen Mengen eines Diisocyanats der unter a) beispielhaft genannten Art "vorverlängert" zum Einsatz gelangen können.
b2) mehrwertige Alkohole, die vorzugsweise ein Molekulargewicht von 62-400 und 2-3 Hydroxylgruppen pro Molekül aufweisen, wie z.B. Ethylenglykol, Propylenglykol, 1,4-Butandiol, 1,6-Hexandiol, Tri methylolpropan, Glycerin oder Gemische derartiger Kettenverlängerungsmittel bzw, Vernetzer ;
b3) organische Polyamine des Molekulargewichtsbereichs 60-4.000, wie z.B. Ethylendiamin, Hexamethylendiamin, Isophorondiamin oder "Aminopolyether" des Molekulargewichtsbereichs 400-4.000, wie sie beispielsweise in EP-B 81701 als Ausgangskomponente bei der Herstellung von Polyurethankunststoffen eingesetzt werden.

Vorzugsweise besteht die Komponente b) aus mindestens einem Polyester- oder Polyetherpolyol der unter b1) beispielhaft genannten Art, gegebenenfalls in Abmischung mit mindestens einem niedermolekularen, mehrwertigen Alkohol der unter b2) beispielhaft genannten Art.

Geeignete Aufbaukomponenten c) sind beispielsweise :

c1) beliebige, eine oder zwei gegenüber Isocyanatgruppen reaktionsfähige Gruppe und mindestens eine Carbonsäure- oder Sulfonsäure-Gruppe aufweisende Verbindungen der beispielsweise in US-PS 3479310, Kolonne 5, Zeile 7, bis Kolonne 6, Zeile 9, genannten Art. Bevorzugte derartige Aufbaukomponenten sind jedoch Monohydroxy-monocarbonsäuren, wie beispielsweise 2-Hydroxyessigsäure, Milchsäure, 4-Hydroxybuttersäure oder Hydroxypivalinsäure (= 3-Hydroxy-2,2-dimethyl-propionsäure) sowie Aminosäuren wie beispielsweise Glutaminsäure, 6-Aminocapronsäure.

Anstelle der beispielhaft genannten Säuren können auch ihre Salze mit anorganischen oder organischen Basen, soweit sie mit den anderen Ausgangsmaterialien verträglich sind, eingesetzt werden. Im Falle der Aminocarbonsäuren ist oftmals die Verwendung der entsprechenden Salze insbesondere mit tert. Aminen, wie z.B. Triethylamin, bevorzugt.

c2) Alkoholische Hydroxylgruppen aufweisende tert. Amine wie beispielsweise N,N-Dimethyl-ethanolamin, N,N-Diethyl-ethanolamin, 1-Dimethylamino-propanol-2 oder auch zwei gegenüber Isocyanatgruppen reaktionsfähige Gruppen aufweisende tert. Amine, wie sie beispielsweise in US-PS 3479310, Kolonne 4, Zeilen 10-63, beispielhaft offenbart sind ;

c3) einwertige Polyetheralkohole, wie sie beispielsweise gemäß US-PS 4237268 als nichtionisch-hydrophile Aufbaukomponenten eingesetzt werden. Diese Polyetheralkohole werden durch Alkoxylierung von geeigneten Startermolekülen, wie beispielsweise einwertigen Alkoholen wie Methanol, Ethanol, n-Propanol oder n-Butanol hergestellt, wobei als Alkoxylierungsmittel Ethylenoxid oder Gemische aus Ethylenoxid und einem anderen Alkylenoxid, vorzugsweise Propylenoxid, verwendet werden, die jedoch zumindest zu 50 Gew.-% aus Ethylenoxid bestehen.

Falls als Aufbaukomponente c) potentiell-hydrophile, d.h. potentiell-ionische Aufbaukomponenten eingesetzt werden, erfolgt die Überführung der potentiell-ionischen Gruppen in ionische Gruppen im Anschluß an die Isocyanat-Polyadditionsreaktion durch Neutralisation oder Quaternierung der potentiell-ionischen Gruppen. Geeignete Neutralisations- bzw. Quaternierungsmittel sind beispielsweise die in US-PS 3479310, Kolonne 6, Zeilen 14-40, beispielhaft genannten Verbindungen. Zur Neutralisation von Säuregruppen werden neben Ammoniak vorzugsweise tert. Amine, wie insbesondere Triethylamin und N,N-Dimethylethanolamin verwendet.

Wie bereits oben ausgeführt, besteht die Aufbaukomponente c) ganz oder überwiegend aus Verbindungen, die lediglich eine gegenüber Isocyanatgruppen reaktionsfähige Gruppe aufweisen. Das Molverhältnis von Aufbaukomponenten c) mit einer gegenüber Isocyanatgruppen reaktionsfähigen Gruppe zu Aufbaukomponenten c) mit zwei gegenüber Isocyanatgruppen reaktionsfähigen Gruppe liegt stets bei mindestens 2 : 1,

Neben den oben genannten Ausgangskomponenten können bei der Herstellung der erfindungswesentlichen Oligourethane auch noch weitere, Isocyanatgruppen oder gegenüber Isocyanatgruppen reaktionsfähige Gruppen aufweisende Aufbaukomponenten mitverwendet werden. Hierzu gehören beispielsweise :

— kettenabbrechende Monoisocyanate, wie Methylisocyanat, Ethylisocyanat oder Phenylisocyanat, deren Mitverwendung jedoch allenfalls in sehr geringen Mengen erfolgt, da es sich bei den erfindungswesentlichen Oligourethanen um Verbindungen einer verzweigten Molekülstruktur handelt, so daß die Mitverwendung derartiger Monoisocyanate nur dem Zweck dienen kann, bei Verwendung von besonders hochfunktionellen Aufbaukomponenten a) und/oder b) eine zu starke Verzweigung und damit Gelierung des Reaktionsansatzes zu verhindern ;

— olefinisch ungesättigte, im Sinne der Isocyanat-Additionsreaktion vorzugsweise monofunktionelle Verbindungen, insbesondere Alkohole oder Amine, wie z.B. 2-Hydroxyethyl-, 2-Hydroxypropyl-, 3-Hydroxypropyl-, 4-Hydroxybutyl- oder 6-Hydroxyhexyl(meth)acrylat, Allylalkohol, Methallylalkohol, Allylamin oder Methallylamin. Die Mitverwendung von derartigen, olefinisch ungesättigten Aufbaukomponenten führt zu erfindungswesentlichen Oligourethanen, die zur Copolymerisation mit den beim erfindungsgemäßen Verfahren eingesetzten, olefinisch ungesättigten Monomeren befähigt sind. Im Falle der Verwendung von derart modifizierten, olefinisch ungesättigten Oligourethanen entstehen somit beim erfindungsgemäßen Verfahren durch Copolymerisation Dispersionen von Polymerisaten, die die Emulgatoren in chemisch eingebauter Form enthalten ;

— Blockierungsmittel für Isocyanatgruppen, wie beispielsweise ε-Caprolactam, Butanonoxim, Malonsäurediethylester oder Acetessigsäureethylester. Bei Mitverwendung derartiger Blockierungsmittel entstehen erfindungswesentliche Oligourethane, die reversibel blockierte Isocyanatgruppen aufweisen. Falls gleichzeitig als olefinisch ungesättigte Monomere alkoholische Hydroxylgruppen-aufweisende Verbindungen mitverwendet werden, können auf diese Weise als erfindungsgemäße Verfahrensprodukte wäßrige Dispersionen von hitze-vernetzbaren Systemen erhalten werden, in denen die, die blockierten Isocyanatgruppen enthaltenden, als Emulgatoren verwendeten Oligourethane gleichzeitig die Doppelrolle eines Vernetzers (blockiertes Polyisocyanat) für die Hydroxylgruppen-aufweisenden Copolymerisate übernehmen.

Da es sich bei den erfindungswesentlichen Oligourethanen um Verbindungen mit verzweigter Molekülstruktur handelt, die zudem im statistischen Mittel pro Molekül mindestens 2,2 endständig eingebauter hydrophiler Gruppierungen aufweisen, ist die Mitverwendung der genannten, gegebenenfalls mitzuverwendenden, kettenabbrechend wirkenden Aufbaukomponenten nur möglich, wenn gleichzeitig der kettenabbrechenden Wirkung dieser Verbindungen durch Verwendung entsprechend hoher Mengen an höher als difunktionellen Aufbaukomponenten a) und/oder b) Rechnung getragen wird, so daß auch bei Mitverwendung der genannten kettenabbrechend wirkenden Aufbaukomponenten die genannten Bedingungen bezüglich der Verzweigung der Moleküle und ihres Gehalts an endständig eingebauten hydrophilen Gruppen entsprochen wird.

Die Herstellung der erfindungswesentlichen Oligourethane kann beispielsweise dergestalt erfolgen, daß man zunächst aus der Polyisocyanatkomponente a) und der Komponente b), sowie gegebenenfalls mitverwendeten difunktionellen Aufbaukomponenten c) unter Einhaltung eines Äquivalentverhältnisses von Isocyanatgruppen zu gegenüber Isocyanatgruppen reaktionsfähigen Gruppen von 1,5 : 1 bis 30 : 1, vorzugsweise 2 : 1 bis 20 : 1, ein NCO-Gruppen aufweisendes Prepolymer bzw. Semiprepolymer herstellt und dieses anschließend mit den monofunktionellen Aufbaukomponenten c) und gegebenenfalls den anderen monofunktionellen Verbindungen mit gegenüber Isocyanatgruppen reaktionsfähigen Gruppen umsetzt, wobei im allgemeinen ein Äquivalentverhältnis von Isocyanatgruppen des Prepolymeren bzw. Semiprepolymeren zu den gegenüber Isocyanatgruppen reaktionsfähigen Gruppen der monofunktionellen Aufbaukomponenten von ca. 0,9 : 1 bis 1,1: 1, vorzugsweise 0,96 : 1 bis 1,04 : 1, eingehalten wird.

Die Überführung von gegebenenfalls vorliegenden potentiellen ionischen Gruppen in ionische Gruppen kann beispielsweise nach Abschluß dieser Isocyanat-Additionsreaktionen erfolgen.

Wie bereits oben ausgeführt, werden Art und Mengenverhältnisse der Ausgangskomponenten so gewählt, daß Oligourethane des oben genannten Molekulargewichtsbereichs resultieren, die im übrigen eine verzweigte Molekülstruktur aufweisen. Unter einer "verzweigten Molekülstruktur" ist hierbei das Vorliegen von mindestens 0,2, vorzugsweise mindestens 1,0, Verzweigungsstellen pro Molekül im statistischen Durchschnitt zu verstehen. Ein derartiger Verzweigungsgrad kann beispielsweise dadurch sichergestellt werden, daß man bei der Herstellung der Oligourethane eine entsprechende Menge an mindestens trifunktionellen Aufbaukomponenten mitverwendet.

Da bei der Herstellung der Oligourethane, wie dargelegt, die Polyisocyanatkomponente in einem erheblichen Überschuß eingesetzt werden kann, handelt es sich oftmals bei den "Oligourethanen" um Gemische aus

(i) Umsetzungsprodukten der monofunktionellen Aufbaukomponenten, insbesondere den monofunktionellen Aufbaukomponenten c) mit NCO-Prepolymeren aus den Ausgangskomponenten a) und b) und
(ii) Umsetzungsprodukten der monofunktionellen Aufbaukomponenten, insbesondere den monofunktionellen Aufbaukomponenten c) mit Polyisocyanaten a), die nicht mit Ausgangskomponenten b) abreagiert worden sind.

Der Begriff "Oligourethane" soll auch derartige Gemische umfassen. Die gemachten Angaben bezüglich des Molekulargewichts der Oligourethane bezieht sich im Falle dieser Gemische dementsprechend auf das mittlere Molekulargewicht (Zahlenmittel) der in derartigen Gemischen vorliegenden Einzelkomponenten. Bei den Angaben bezüglich des Verzweigungsgrades und bezüglich der Anzahl der in die Oligourethane endständig eingebauten hydrophilen Gruppen handelt es sich um statistische Mittelwerte. So weist beispielsweise ein Umsetzungsprodukt aus 1 Mol Triisocyanat a) mit 3 Mol einer monofunktionellen Aufbaukomponente c), welches endständig 3 hydrophile Zentren aufweist, eine Verzweigungsstelle und 3 endständig angeordnete hydrophile Zentren auf. Das Umsetzungsprodukt von (i) 4 Mol monofunktioneller Aufbaukomponente c) mit (ii) 1 Mol eines (tetrafunktionellen) Prepolymeren aus 2 Mol Triisocyanat a) und 1 Mol Diol b) weist seinerseits im statistischen Mittel 2 Verzweigungsstellen pro Molekül und 4 endständig angeordnete hydrophile Zentren auf. Ein äquimolares Gemisch aus diesen beiden Komponenten wiese demnach im statistischen Mittel 1,5 Verzweigungsstellen pro Molekül und 3,5 endständig angeordnete hydrophile Zentren auf.

Die genannten Isocyanat-Additionsreaktionen werden im allgemeinen innerhalb des Temperaturbereichs von 20-180°C, vorzugsweise 50 bis 100°C, durchgeführt, wobei lösungsmittelfrei oder in Anwesenheit eines geeigneten Lösungsmittels, wie beispielsweise Aceton, gearbeitet wird. Besonders gut geeignet ist eine Arbeitsweise, derzufolge die NCO-Prepolymeren bzw. -Semiprepolymeren aus den Komponenten a) und b) lösungsmittelfrei in der Schmelze hergestellt und anschließend in Aceton gelöst und mit den monofunktionellen Aufbaukomponenten umgesetzt werden. Im Anschluß hieran erfolgt dann gegebenenfalls die Überführung der potentiellen ionischen Gruppen in ionische Gruppen, beispielsweise durch Zugabe eines geeigneten Neutralisationsmittels zur acetonischen Lösung und Überführung der acetonischen Lösung in eine wäßrige Lösung bzw. Dispersion durch Zugabe von Wasser und Abdestillieren des Acetons.

Selbstverständlich können auch andere Lösungsmittel, wie beispielsweise N,N-Dimethylformamid, N,N-Diethylformamid, Methylethylketon, N-Methylpyrrolidon, Toluol, Ethylacetat oder Gemische derartiger Lösungsmittel verwendet werden, wobei auch auf eine Entfernung der Hilfslösungsmittel verzichtet werden

kann, falls die Anwesenheit derartiger Lösungsmittel in den letztendlich erhaltenen erfindungsgemäßen Verfahrensprodukten nicht als störend empfunden wird.

Zur Durchführung des erfindungsgemäßen Verfahrens, d.h. der Polymerisationsreaktion der olefinisch ungesättigten Monomeren werden die Oligourethane als Emulgatoren eingesetzt. Sie kommen hierzu im allgemeinen in Form von 5 bis 70, vorzugsweise 20 bis 50-gew.-%igen wäßrigen, oftmals kolloidalen Lösungen oder wäßrigen Dispersionen zum Einsatz.

Die erfindungswesentlichen Oligourethane weisen aufgrund ihrer speziellen Struktur, ähnlich wie niedermolekulare Emulgatoren, eine sogenannte kritische Mizellkonzentration auf ; sie sind somit zur Ausbildung von Mizellstrukturen in wäßrigen Phase geeignet. Die mittels Oberflächenspannungsmessungen bzw. konduktometrischen Messungen bestimmbaren kritischen Mizellkonzentrationen liegen im allgemeinen bei oberhalb 0,5 g, vorzugsweise bei oberhalb 1,0 g Oligourethan pro Liter Lösung bzw. Dispersion. Diese Konzentrationen stellen somit den unteren Grenzwert dar bezüglich der Konzentration der beim erfindungsgemäßen Verfahren eingesetzten Lösungen bzw. Dispersionen der Oligourethane.

Das erfindungsgemäße Verfahren, d.h. die Polymerisation der olefinisch ungesättigten Monomeren erfolgt nach den üblichen Methoden der Emulsionspolymerisation in Gegenwart der oben beschriebenen Oligourethane. Das Verhältnis der polymerisierbaren olefinisch ungesättigten Monomeren zu den Oligourethanen beträgt hierbei 10 bis 99,5 Gewichtsteile, vorzugswiese 50 bis 99 Gewichtsteile, zu 0,5 bis 90 Gewichtsteilen Oligourethan, vorzugsweise zu 1 bis 50 Gewichtsteilen Oligourethan.

Als olefinisch ungesättigte Monomere seien beispielhaft genannt :

a) α,β-olefinisch ungesättigte Monocarbonsäuren mit 3 bis 5 C-Atomen und deren Ester bzw. Nitrile und Amide wie Acryl-, Methacryl- und Crotonsäure. Acryl-und Methacrylsäureamide, Acryl- und Methacrylnitril, Ester der Acryl- und Methacrylsäure, insbesondere solche mit gesättigten einwertigen aliphatischen oder cycloaliphatischen Alkoholen mit 1 bis 20 Kohlenstoffatomen, wie Ester der genannten Säuren mit Methyl-, Ethyl-, Propyl-, Isopropyl, n-Butyl-, Isobutyl-, Hexyl-, 2-Ethylhexyl-, Octyl-, Stearylalkohol, Cyclohexanol, Methylcyclohexanol, ferner mit Benzylalkohol, Phenol, Kresol, Furfurylalkohol, Monoester von α,β-monoolefinisch ungesättigten Monocarbonsäuren mit 3 bis 4 C-Atomen mit zweiwertigen gesättigten aliphatischen Alkoholen mit 2 bis 4 C-Atomen, wie beispielsweise 2-Hydroxyethylmethacrylat, Hydroxypropylmethacrylat, 4-Hydroxybutylmethacrylat, 2-Hydroxyethylacrylat, Hydroxypropylacrylat, 4-Hydroxybutylacrylat ; Glycidylester der Acryl- und Methacrylsäure, wie Glycidyl(meth)acrylat ; Aminoalkylester und Aminoalkylamide der Acryl- und Methacrylsäure, wie 2-Aminoethyl(meth)acryl-hydrochlorid, N,N-Dimethylaminoethyl-(meth)acrylat, N,N-Dimethylaminopropylacrylamid.

Auch Monomere mit zwei oder mehr Doppelbindungen im Molekül können eingesetzt werden. Hiermit können dann hochverzweigte bzw. vernetzte Polymerpartikel, sogenannte Mikrogele, erhalten werden. Als solche Monomere sind z.B. Ethylenglykoldiacrylat oder -methacrylat geeignet.

b) α,β-olefinisch ungesättigte Dicarbonsäuren mit 3 bis 5 C-Atomen und ihre Derivate, wie Fumarsäure, Maleinsäure, Itaconsäure, Mono- und Diester der vorgenannten Dicarbonsäuren mit 1 bis 18 C-Atomen im Alkoholrest, wie Maleinsäuredimethylester, Maleinsäurediethylester, Maleinsäuredibutylester, Maleinsäuremonohexylester, Maleinsäuremonocyclohexylester.

c) Mono- und Diester des Vinylalkohols mit Carbonsäuren oder mit Halogenwasserstoffsäuren, Vinylether, Vinylketone, Vinylamide, wie Vinylacetat, Vinylpropionat, Vinyllaurat, Vinylstearat, Vinylbenzoat, Chlorvinylacetat, Divinyladipat, Vinylchlorid, Vinylidenchlorid, Vinylethylether, Vinylbutylether, Vinylethyl- oder Vinylisobutylether, Vinylethylketon, Vinylformamid, N-Vinylacetamid.

d) Vinylverbindungen von Aromaten und Heterocyclen, wie Styrol, α-Methylstyrol, Vinyltoluol, p-Chlorstyrol, Divinylbenzol, 2-Vinylpyrrolidon, 2-Vinylpyridin.

e) N-Methylolether des Acrylsäure- und Methacrylsäureamids gemäß der allgemeinen Formel I

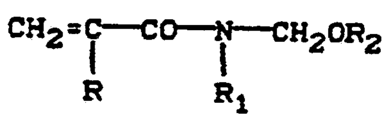 (I)

in der R für Wasserstoff oder Methyl, $R_1$ für Wasserstoff, Alkyl, Aralkyl oder Aryl, $R_2$ für Alkyl oder Cycloalkyl, wie z.B. Methyl, Ethyl, n-Propyl, Isopropyl, n-Butyl, Isobutyl, Cyclohexyl stehen (vergl. DE-B-1035363), ferner die nicht veretherten N-Methylolverbindungen des Acryl- und Methacrylsäureamids.

f) Mannich-Basen des Acrylsäure- und Methacrylsäureamids gemäß der allgemeinen Formel II

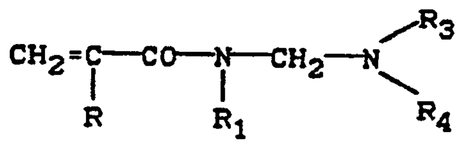

(II)

in der R und $R_1$ die gleiche Bedeutung wie in der Formel I haben und $R_3$ und $R_4$ für Alkyl, Cycloalkyl oder gemeinsam für einen heterocyclischen Rest, wie den Morpholinrest, stehen. Geeignete Verbindungen dieses Typs sind in der DE-B-1102404 genannt.

g) Acryl- und Methacrylsäurederivate mit einer endständigen Halogenmethylcarbonylgruppe der allgemeinen Formel III

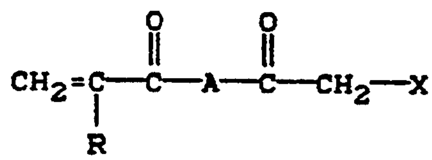

(III)

R = H, $CH_3$

A = $—NH—CH_2—NH—$

= —NH—CO—NH—

= 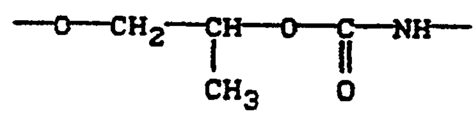

= 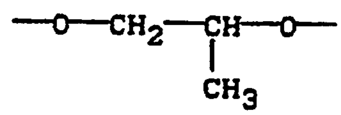

X = Cl, Br

h) Allylverbindungen, wie Triallylcyanurat, Triallylphosphat, Allylalkohol, Allylamin.

i) Monoolefinisch ungesättigte aliphatische Kohlenwasserstoffe mit 2 bis 6 C-Atomen, wie Ethylen, Propylen, Butylen, Isobutylen.

j) Konjugierte Diolefine mit 4 bis 6 C-Atomen, wie Butadien, Isopren, 2,3-Dimethylbutadien, Chlorbutadien.

k) Ferner Norbornen und Hydroxymethylnorbornen. Vorzugsweise werden eingesetzt:

Acryl- und Methacrylsäureester mit 1 bis 12 C-Atomen im Alkoholrest, Acrylsäure, Methacrylsäure sowie die $C_2$-$C_4$-Hydroxyalkylester dieser Säuren, Styrol, Acryl- und Methacrylsäurenitril, Vinylacetat, Vinylpropionat, Vinylchlorid, Vinylidenchlorid, Ethylen oder Propylen in Verbindung mit einem oder mehreren der aufgeführten Monomeren.

Die Polymerisation erfolgt im allgemeinen bei Temperaturen von 10-150°C, vorzugsweise bei 40-130°C.

Als Initiatoren kommen im allgemeinen 0,05-5 Gew.-%, bezogen auf die Monomeren, in Radikale zerfallende Initiatoren in Frage, Solche Initiatoren sind z.B. organische Peroxide, wie z.B. Lauroylperoxid, Cyclohexanonhydroperoxid, tert.-Butyl-peroctoat, tert.-Butyl-perpivalat, tert.-Butylperbenzoat, Dichlorbenzoylperoxid, Benzoylperoxid, Di-tert.-Butylperoxid, tert.-Butylhydroperoxid, Cumol-hydroperoxid, Peroxycarbonate, wie Di-iso-propyl-peroxydicarbonat, Dicyclohexyl-peroxidicarbonat, Diisooctyl-peroxidicarbonat, Sulfonylperoxide, wie Acetylcyclohexyl-sulfonylperacetat, Sulfonylhydrazide, Azoverbindungen, wie Azodiisobuttersäuredinitril sowie wasserlösliche Azoverbindungen, wie sie z.B. in der DE-A-2841045 beschrieben sind.

Anorganische Peroxide, wie Wasserstoffperoxid, Kaliumperoxodisulfat und Ammoniumperoxodisulfat sind ebenfalls geeignet.

Die in Radikale zerfallenden Initiatoren können allein oder auch in Verbindung mit Reduktionsmitteln oder Schwermetallverbindungen eingesetzt werden. Solche Verbindungen sind beispielsweise Natrium- oder Kaliumpyrosulfit, Ameisensäure, Ascorbinsäure, Thioharnstoff, Hydrazin- bzw. Aminderivate, Rongalit. Die Schwermetallverbindungen können sowohl in öllöslicher als auch in wasserlöslicher Form vorliegen. Wasserlösliche Schwermetallverbindungen sind beispielsweise Silbernitrat, Halogenide oder Sulfate des 2- oder 3-wertigen Eisens, Kobalts, Nickels, Salze des Titans oder Vanadins in niedrigeren Wertigkeitsstufen. Öllösliche Schwermetallverbindungen sind beispielsweise Kobaltnaphthenat oder die Acetylacetonkomplexe des Vanadins, Kobalts, Titans, Nickels oder des Eisens.

Die Polymerisation wird im allgemeinen bei pH-Werten von 2-10, vorzugsweise 4 bis 9, durchgeführt, pH-Werte von unterhalb 7 sind bevorzugt beim Einsatz von kationischen Oligourethanen, pH-Werte von oberhalb 6 bei anionischen Oligourethanen. Die Einstellung der pH-Werte innerhalb der genannten Bereiche erfolgt bei Anwesenheit von sauren Gruppen im Reaktionsgemisch oftmals durch die Zugabe von wäßrigem Ammoniak.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden im allgemeinen in Mengen von 0,1-2 Gew.-%, bezogen auf die Monomermischung zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden.

Besonders bevorzugt sind das kontinuierliche und das Zulaufverfahren. Bei letzterem wird unter Stickstoffatmosphäre Wasser zusammen mit einem Teil oder dem gesamten Emulgatorsystem und gegebenenfalls einem Teil des Monomergemisches vorgelegt, auf die Polymerisationstemperatur erhitzt und das Monomergemisch sowie der Initiator und gegebenenfalls Emulgator innerhalb von 0,5-10 Stunden, bevorzugt 1-6 Stunden, zugetropft.

Nach einiger Zeit wird nachaktiviert und die Reaktion bis zu einem Umsatz von ca. 99,0%-99,9 Gew.-% vervollständigt. Restmonomere sowie eventuell noch vorhandene organische Lösungsmittel können im Anschluß an die Emulsionspolymerisation evtl. mit dem vorliegenden Wasser oder einem Teil davon im Vakuum destillativ entfernt werden. Danach kann gegebenenfalls weiteres Wasser zugesetzt werden, so daß letztendlich als Verfahrensprodukte 10-60 gew.-%ige, vorzugsweise 20-50 gew.-%ige Dispersionen resultieren.

Die mittels Laser-Streulicht-Korrelationsspektroskopie gemessenen mittleren Teilchendurchmesser liegen je nach Reaktionsbedingungen zwischen 20 und 1.000 nm, vorzugsweise zwischen 50 und 500 nm. Dispersionen mit Teilchengrößen unter 50 nm erscheinen transparent, während solche mit größeren Teilchen zunehmend trüb erscheinen.

Die Dispersionen können mit gleichgeladenen Dispersionen abgemischt werden, wie z.B. mit Polyvinylacetat-, Polyethylen-, Polystyrol-, Polybutadien-, Polyvinylchlorid- und Polyacrylat-Dispersionen.

Schließlich können auch Füllstoffe, Weichmacher, Pigmente, Fluß- und Kieselsäuresole, Aluminium-, Ton-, Asbest-Dispersionen eingearbeitet werden.

Die erfindungsgemäßen Verfahrensprodukte stellen stabile, lager- und versandfähige wäßrige Dispersionen dar und können zu beliebig späterem Zeitpunkt formgebend verarbeitet werden. Sie trocknen im allgemeinen unmittelbar zu formstabilen Kunststoffüberzügen auf. Die Formgebung der Verfahrensprodukte kann auch in Gegenwart von an sich bekannten Vernetzungsmitteln erfolgen. Dazu werden im Verlauf des Verfahrens den modifizierten Vinylpolymerisaten polyfunktionelle, vernetzend wirkende Substanzen zugesetzt, die nach Verdunsten des gegebenenfalls vorhandenen Lösungsmittels bei Raum- oder erhöhter Temperatur chemische Vernetzung bewirken. Genannt seien : Schwefel, freie und partiell oder vollständig verkappte Polyisocyanate, Carbodiimide, Formaldehyd oder Formaldehyd-abgebende Substanzen, Melaminharze, Methylolverbindungen und deren Ether, organische und anorganische Peroxide.

Wie bereits oben ausgeführt, können bei erhöhter Temperatur selbstvernetzende Dispersionen dann erhalten werden, wenn bei der Herstellung der Oligourethane durch Mitverwendung von Blockierungsmitteln für Isocyanatgruppen der genannten Art in die Oligourethane blockierte Isocyanatgruppen eingebaut werden.

Die gegebenenfalls gelösten oder angeschlämmten Vernetzer, Füllstoffe, Pigmente und sonstigen Zusatzstoffe können im Verlauf des Verfahrens zugefügt werden.

Die erhaltenen wäßrigen Dispersionen können flüssige oder pastenartige Konsistenz aufweisen und sind ohne Emulgatorzusatz stabil, jedoch können entsprechende kationische, anionische oder neutrale Emulgatoren und Schutzkolloide sowie Verdickungsmittel im Laufe des Verfahrens zugefügt werden, wie sauer oder ammoniakalisch aufgeschlossenes Kasein, Seifen, Invertseifen, Alkylsulfonate, Polyvinylalkohol, oxethylierte Phenole, Oleylalkoholpolglykolether, oxethyliertes Polypropylenglykol oder Naturprodukte, wie Gelatine, Gummiarabicum, Tragant, Fischleim. Derartige Zusätze dienen vor allem der zusätzlichen Herabsetzung der Oberflächenspannung der wäßrigen Dispersionen. Sie beeinflussen weiterhin die Stabilität sowie die Koagulierbarkeit dieser Dispersionen.

Es sei jedoch betont, daß der Zusatz derartiger bei der Emulsionspolymerisation üblicher Emulgatoren im Rahmen des erfindungsgemäßen Verfahrens keineswegs notwendig ist. Die nach dem erfindungsgemäßen Verfahren erhältlichen wäßrigen Dispersionen sind vielfältig anwendbar.

So können Tauchartikel, nach dem Latex-Schaumschlagverfahren Schaumstoffe, durch Elektrolytzusatz zu den wäßrigen Dispersionen Koagulate, die auf der Mischwalze verarbeitet werden können, und durch Verdunsten des Wassers klebfreie und klebende Filme und Folien erhalten werden. Die Verfahrensprodukte sind zur Beschichtung bzw. zum Überziehen und zum Imprägnieren von gewebten und nichtgewebten Textilien, Leder, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfasern, Asbest, Plastik- oder Gummiabfälle, keramische Materialien, als Hilfsmittel im Zeugdruck, als Zusatz zu Polymerisat-Dispersionen, als Schlichtemittel und zur Lederausrüstung geeignet.

Bevorzugt ist der Einsatz dieser Dispersionen für wäßrige Lacksysteme.

## Beispiele

### I. Herstellung von erfindungswesentlichen Oligourethanen

#### Oligourethan 1

170 g eines Hydroxypolyesters aus Adipinsäure, Neopentylglykol und Hexandiol (Molverhältnis der Diole 1 : 1) mit dem mittleren Molgewicht ca. 1.700 g $mol^{-1}$ werden in 5 Stunden bei 100°C mit 160 g eines Polyisocyanats, das durch Teiltrimerisierung der NCO-Gruppen von Hexamethylendiisocyanat und anschließende Entfernung von freiem Hexamethylendiisocyanat entstanden ist und das einen NCO-Gehalt von ca. 21% aufweist, umgesetzt. Man erhält ein Vorpolymerisat mit einem NCO-Gehalt von ca. 7,5%, das man in 225 g Aceton auflöst und mit der Lösung von 70,8 g Hydroxypivalinsäure in 250 g Aceton versetzt. Man vermischt und fügt 50,5 g Triethylamin zu, erhitzt dann bis zum Sieden des Acetons am Rückfluß, bis keine NCO-Gruppen in der Lösung nachzuweisen sind und gibt schließlich unter intensivem Rühren 677 g entionisiertes Wasser hinzu. Nun wird bei vermindertem Druck Aceton abdestilliert. Man erhält eine ca. 40%ige wäßrige Lösung des Oligourethans 1. Die mit einem Tensiometer nach der Ringmethode durchgeführte Messung der Oberflächenspannung ergibt eine kritische Mizellkonzentration von ca. 11,3 g/l.

#### Oligourethan 2

Man verfährt ebenso wie bei der Herstellung des Oligourethans 1 und setzt die gleichen Ausgangsprodukte ein. Vor der Umsetzung des Hydroxypolyesters mit dem Polyisocyanat wird dieser mit einer unterschüssigen Menge Hexamethylendiisocyanat "vorverlängert". Das Oligourethan 2 besteht aus

| | |
|---|---|
| 226 g | Hydroxypolyester (wie bei Oligourethan 1) |
| 5,5 g | Hexamethylendiisocyanat |
| 160 g | Polyisocyanat |
| 70,8 g | Hydroxypivalinsäure |
| 50,5 g | Triethylamin |

Das Produkt ist ebenfalls ca. 40%ig in entionisiertem Wasser gelöst.

Die mittels Oberflächenspannung bestimmte kritische Mizellkonzentration beträgt 14,9 g/l.

### Erfindungsgemäßes Verfahren

#### Beispiel 1

In einem 2 1-Vierhalskolben mit wirksamem Rührer, Rückflußkühler, Gaseinlaß und -auslaß werden 317 g entionisiertes Wasser vorgelegt. Danach wird unter Stickstoffatmosphäre gründlich ausgekocht und auf 60°C abgekühlt. Danach werden 350 g der 40 gew.-%igen wäßrigen Lösung des Oligourethans 1 zur Vorlage hinzugegeben und anschließend Stickstoff übergeleitet.

Danach wird eine Mischung von 7 g Methacrylsäuremethylester und 7 g Acrylsäure-n-butylester (Monomergemisch I) gleichzeitig mit 10,4 g einer 2 gew.-%igen wäßrigen ammoniakalischen Lösung des Initiators 4,4'-Azobis-(4-cyanpentancarbonsäure) (Initiatorlösung I) schnell zudosiert. Nach einer Reaktionszeit von 30

min werden gleichzeitig, aber getrennt innerhalb von 3 Stunden eine Monomermischung von 63 g Methacrylsäuremethylester und 63 g Acrylsäure-n-butylester (Monomermischung II) sowie 102 g einer 1 gew.-%igen wäßrigen ammoniakalischen Lösung von 4,4'-Azobis-(4-cyanpentancarbonsäure) (Initiatorlösung II) zudosiert. Nach einer zusätzlichen Reaktionszeit von 2 Stunden wird mit 10,6 g einer 3 gew.-%igen wäßrigen ammoniakalischen Lösung desselben Initiators nachaktiviert. Danach wird noch weitere 5 Stunden auspolymerisiert. Anschließend werden im Wasserstrahlvakuum ca. 100 ml Wasser und Restmonomere abdestilliert und durch 100 ml entionisiertes Wasser ersetzt. Die Konzentration der wäßrigen Dispersion beträgt 31,0 Gew.-%, der pH-Wert 7,3 und der mittlere Teilchendurchmesser (gemessen mittels Laserstreulicht-Korrelationsspektroskopie) 103 ± 3 nm. Es wurde kein Koagulat gefunden.

Beispiele 2 und 3

Es wird wie in Beispiel 1 verfahren, mit dem Unterschied, daß in den Beispielen 2 und 3 das Gewichtsverhältnis Emulgator (Oligourethan 1) : Monomeren auf 4 : 6 bzw. 3 : 7 herabgesetzt wird. Nähere Angaben sind in Tabelle 1 aufgelistet; zusätzlich aufgeführt sind die physikalisch-chemischen Kenndaten der wäßrigen Dispersionen.

Tabelle 1

| Vorlage | Beisp. 2 | Beisp. 3 |
| --- | --- | --- |
| entionisiertes Wasser [g] | 362 | 404 |
| Oligourethan 1 (40 %) [g] | 280 | 210 |
| **Monomergemisch I** | | |
| Methacrylsäuremethylester [g] | 8 | 10 |
| Acrylsäure-n-butylester [g] | 8 | 10 |
| **Initiatorlösung I** | | |
| 4,4'-Azobis-(4-cyanpentancarbonsäure) [g] | 0,2 | 0,2 |
| 0,5 %ige wäßrige Lösung von Ammoniak [g] | 10,2 | 10,2 |
| **Monomergemisch II** | | |
| Methacrylsäuremethylester [g] | 76 | 88 |
| Acrylsäure-n-butylester [g] | 76 | 88 |
| **Initiatorlösung II** | | |
| 4,4'-Azobis-(4-cyanpentancarbonsäure) [g] | 1 | 1 |
| 0,25 %ige wäßrige Lösung von Ammoniak [g] | 101 | 101 |
| **Nachaktivatorlösung** | | |
| 4,4'-Azobis-(4-cyanpentancarbonsäure) [g] | 0,3 | 0,3 |
| 0,75 %ige wäßrige Lösung von Ammoniak [g] | 10,3 | 10,3 |
| Konzentration [Gew.-%] | 30,8 | 29,7 |
| pH-Wert | 8,0 | 8,4 |
| mittlerer Teilchendurchmesser [nm] | 356 ± 7 | 416 ± 9 |
| Koagulat | - | - |
| Filmeigenschaften | klarer, weicher, elastischer Film | klarer, weicher, elastischer Film |

Beispsiele 4-6

Es wird wie in Beispiel 1 verfahren, mit dem Unterschied, daß das Gewichtsverhältnis Emulgator (Oligourethan 1) : Monomeren auf 3 : 7 herabgesetzt wird. Nähere Angaben sind in Tabelle 2 aufgelistet ; zusätzlich aufgeführt sind hier noch die physikalisch-chemischen Kenndaten der wäßrigen Dispersionen.

Tabelle 2

| Vorlage | Beisp.4 | Beisp.5 | Beisp.6 |
|---|---|---|---|
| entionisiertes Wasser [g] | 295 | 295 | 295 |
| Oligourethan 1 (40 %) [g] | 300 | 300 | 300 |
| **Monomergemisch I** | | | |
| Styrol [g] | 10 | 10 | 10 |
| Methacrylsäuremethylester [g] | 10 | 10 | 10 |
| Acrylsäure-n-butylester [g] | 8 | 8 | 8 |
| **Initiatorlösung I** | | | |
| 4,4'-Azobis-(4-cyanpentan-carbonsäure) [g] | 0,2 | 0,2 | 0,2 |
| 0,5 %ige wäßrige Lösung von Ammoniak [g] | 10,2 | 10,2 | 10,2 |
| **Monomergemisch II** | | | |
| Styrol [g] | 75 | 67 | 60 |
| Methacrylsäuremethylester [g] | 75 | 67 | 60 |
| Acrylsäure-n-butylester [g] | 72 | 72 | 72 |
| Methacrylsäure-2-hydroxy-ethylester [g] | 31 | 46 | 61 |
| **Initiatorlösung II** | | | |
| 4,4'-Azobis-(4-cyanpentan-carbonsäure) [g] | 1 | 1 | 1 |
| 0,25 %ige wäßrige Lösung von Ammoniak [g] | 101 | 101 | 101 |
| **Nachaktivatorlösung** | | | |
| 4,4'-Azobis-(4-cyanpentan-carbonsäure) [g] | 0,3 | 0,3 | 0,3 |
| 0,75 %ige wäßrige Lösung von Ammoniak [g] | 10,3 | 10,3 | 10,3 |
| Konzentration [Gew.-%] | 41,1 | 41,0 | 40,8 |
| pH-Wert | 7,1 | 7,0 | 7,0 |
| mittlerer Teilchendurchmesser [nm] | 79 ± 3 | 79 ± 1 | 80 ± 1 |
| Koagulatmenge [g] | - | - | - |
| Filmeigenschaften | relativ harter, klarer Film | relativ harter, klarer Film | relativ harter, klarer Film |

Beispiele 7-9

Es wird wie in den Beispielen 4-6 verfahren, mit dem Unterschied, daß anstelle des Oligourethans 1 Oligourethan 2 als polymerer Emulgator zugesetzt wird. Nähere Angaben sind in Tabelle 3 aufgelistet ; zusätzlich aufgeführt sind hier noch die physikalisch-chemischen Daten der wäßrigen Dispersionen.

Beispiele 10 und 11

Es wird unter den gleichen Bedingungen wie in den Beispielen 7-9 polymerisiert ; nähere Angaben hierzu sowie die physikalisch-chemischen Daten der wäßrigen Dispersionen sind in Tabelle 4 aufgelistet.

Tabelle 3

| Vorlage | Beisp.7 | Beisp.8 | Beisp.9 |
|---|---|---|---|
| entionisiertes Wasser [g] | 415 | 445 | 445 |
| Oligourethan 2 (40 %) [g] | 100 | 50 | 50 |
| **Monomergemisch I** | | | |
| Methacrylsäuremethylester [g] | 24 | 25 | - |
| Acrylsäure-n-butylester [g] | 12 | 13 | 19 |
| Acrylnitril [g] | - | - | 19 |
| **Initiatorlösung I** | | | |
| 4,4'-Azobis-(4-cyanpentan carbonsäure) [g] | 0,5 | 0,5 | 0,5 |
| 0,5 %ige wäßrige Lösung von Ammoniak [g] | 10,3 | 10,3 | 10,3 |
| **Monomergemisch II** | | | |
| Methacrylsäuremethylester [g] | 216 | 228 | - |
| Acrylsäure-n-butylester [g] | 108 | 114 | 171 |
| Acrylnitril [g] | - | - | 171 |
| **Initiatorlösung II** | | | |
| 4,4'-Azobis-(4-cyanpentan-carbonsäure) [g] | 2 | 2 | 2 |
| 0,25 %ige wäßrige Lösung von Ammoniak [g] | 101 | 101 | 101 |
| **Nachaktivatorlösung** | | | |
| 4,4'-Azobis-(4-cyanpentan-carbonsäure) [g] | 0,5 | 0,5 | 0,5 |
| 0,75 %ige wäßrige Lösung von Ammoniak [g] | 10,3 | 10,3 | 10,3 |
| Konzentration [Gew.-%] | 41,2 | 41,8 | 41,0 |
| pH-Wert | 7,0 | 7,0 | 7,0 |
| mittlerer Teilchendurchmesser [nm] | 71 | 88 | 100 |
| Koagulatmenge [g] | 0,2 | 2,2 | - |
| Filmeigenschaften | harter, spröder Film | harter, spröder Film | harter, spröder Film |

Tabelle 4

| Vorlage | Beisp.10 | Beisp.11 |
|---|---|---|
| entionisiertes Wasser [g] | 413 | 413 |
| Oligourethan 2 (40 %) [g] | 100 | 100 |
| **Monomergemisch I** | | |
| Styrol [g] | 14 | 14 |
| Methacrylsäuremethylester [g] | 14 | 14 |
| Acrylsäure-n-butylester [g] | 8 | 8 |
| **Initiatorlösung I** | | |
| 4,4'-Azobis-(4-cyanpentancarbonsäure) [g] | 0,5 | 0,5 |
| 1,25 %ige wäßrige Lösung von Ammoniak [g] | 10,5 | 10,5 |
| **Monomergemisch II** | | |
| Styrol [g] | 96 | 88 |
| Methacrylsäuremethylester [g] | 96 | 88 |
| Acrylsäure-n-butylester [g] | 72 | 72 |
| Methacrylsäure-2-hydroxyethylester [g] | 61 | 76 |
| **Initiatorlösung II** | | |
| 4,4'-Azobis-(4-cyanpentancarbonsäure) [g] | 2 | 2 |
| 0,5 %ige wäßrige Lösung von Ammoniak [g] | 102 | 102 |
| **Nachaktivatorlösung** | | |
| 4,4'-Azobis-(4-cyanpentancarbonsäure) [g] | 0,5 | 0,5 |
| 1 %ige wäßrige Lösung von Ammoniak [g] | 10,5 | 10,5 |
| Konzentration [Gew.-%] | 41,7 | 42,0 |
| pH-Wert | 7,5 | 7,5 |
| mittlerer Teilchendurchmesser [nm] | 226 ± 4 | 105 ± 1 |
| Koagulatmenge [g] | 2,0 | 3,5 |
| Filmeigenschaften | relativ harter, klarer Film | relativ harter, klarer Film |

Erfindungsgemäße Verwendung

Beispiel 12

Nachstehend wird die Herstellung eines transparenten, wasserverdünnbaren Beschichtungsmittels auf Basis der erfindungsgemäßen Dispersion gemäß Beispiel 11 beschrieben.

Zusammensetzung des Beschichtungsmittels:

| | |
|---|---|
| Dispersion gemäß Beispiel 11 | 76,2 Gew.-Teile |
| Melamin-Formaldehydharz[1) ] 68 %ig in Wasser | 11,2 Gew.-Teile |
| Tensid[2)], 10 %ig in Wasser | 1,9 Gew.-Teile |
| Verlaufmittel[3)] 50 %ige Lieferform | 1,1 Gew.-Teile |
| Entlüftungsmittel[4)] | 0,8 Gew.-Teile |
| Ethyldiglykol | 4,4 Gew.-Teile |
| Butyldiglykol | 4,4 Gew.-Teile |

| | | |
|---|---|---|
| Festgehalt | 39 | Gew.-% |
| Auslaufzeit (DIN 53 211, 4 mm-Becher) | 18 | s |
| pH-Wert | 7,2 | |

1) ®Luwipal 063, Handelsprodukt der BASF AG
2) Fluortensid TF 929, Handelsprodukt der Bayer AG
3) ®Byk 301, Handelsprodukt der Byk-Chemie GmbH
4) ®Additol XW 393, Handelsprodukt der Hoechst AG

Das Beschichtungsmittel kann nach den üblichen Techniken, wie z.B. Streichen, Rollen, Rakeln oder Spritzen auf beliebige Substrate appliziert werden. Dies kann auch ein im naß-in-naß-Verfahren bereits vorbeschichteter Untergrund sein, wie beispielsweise ein beliebig pigmentierter Basislack.

Nach 5 min Ablüftzeit bei Raumtemperatur wird 10 min bei 80°C vorgetrocknet und anschließend 20 min bei 140°C eingebrannt. Es resultieren klare Beschichtungen mit einwandfreiem Verlauf, hoher Brillanz, hervorragenden mechanischen Filmeigenschaften und chemischen Beständigkeiten.

Auf die beschriebene Weise erzielte Filme ergeben nach 24 Std. Lagerung an der Raumluft folgende Prüfwerte:

| | |
|---|---|
| Schichtstärke | 40 µm |
| Pendelhärte (DIN 53 157) | 168 s |
| Erichsentiefung (DIN 53 156) | 8,5 mm |
| Wasserbeständigkeit, 24 Std. Belastung | unverändert |
| Ethanolbeständigkeit, 10 min Belastung | unverändert |
| Xylolbeständigkeit, 10 min Belastung | unverändert |

**Patentansprüche**

1. Verfahren zur Herstellung von wäßrigen Dispersionen von Polymerisaten durch Polymerisation von olefinisch ungesättigten Monomeren in wäßrigem Medium in Gegenwart von Radikalbildnern und unter Verwendung von hydrophil modifizierten, Urethangruppenaufweisenden Emulgatoren eines unter 30.000 liegenden mittleren Molekulargewichts, dadurch gekennzeichnet, daß man als Urethangruppen-aufweisende Emulgatoren Oligourethane mit verzweigter Molekülstruktur verwendet, die
(i) aus organischen Polyisocyanaten (a) und organischen Verbindungen mit gegenüber Isocyanatgruppen reaktionsfähigen Gruppen (b) und gegebenenfalls weiteren, Isocyanatgruppen oder gegenüber Isocyanatgruppen reaktionsfähige Gruppen aufweisenden Verbindungen unter Mitverwendung von hydrophile Gruppen oder in hydrophile Gruppen überführbare Gruppen aufweisenden, im Sinne der Isocyanat-Additionsreaktion mono- und gegebenenfalls difunktionellen Aufbaukomponenten (c) unter gegebenenfalls anschließend erfolgender Überführung von potentiellen hydrophilen Gruppen in hydrophile Gruppen mit der Maßgabe hergestellt worden sind, daß Komponenten (a) und/oder (b) mitverwendet werden, die im Sinne der Isocyanat-Additionsreaktion höher als difunktionell sind, wobei im Falle der Mitverwendung difunktioneller Aufbaukomponenten (c) das Molverhältnis der monofunktionellen (potentiell) hydrophilen Aufbaukomponenten (c) zu den entsprechenden difunktionellen Aufbaukomponenten (c) bei mindestens 2 : 1 liegt, und die
(ii) einen, die Löslichkeit oder Dispergierbarkeit in Wasser gewährleistenden Gehalt an chemisch eingebauten hydrophilen Zentren aufweisen, die ausschließlich oder überwiegend endständig angeordnet sind, mit der Maßgabe, daß im statistischen Mittel pro Molekül mindestens 2,2 endständig eingebaute hydrophile Gruppierungen vorliegen,

2. Verfahren gemäß Anspruch 1, dadurch gekennzeichnet, daß die als Emulgatoren verwendeten Oligourethane 7,3 bis 400 Milliäquivalente pro 100 g an endständig eingebauten Carboxylatgruppen aufweisen,

3. Verfahren gemäß Anspruch 1 und 2, dadurch gekennzeichnet, daß das Gewichtsverhältnis der olefinisch ungesättigten Monomeren zu den als Emulgatoren verwendeten Oligourethanen bei 1 : 1 bis 99 : 1 liegt.

4. Verfahren gemäß Anspruch 1 bis 3, dadurch gekennzeichnet, daß man die Polymerisationsreaktion diskontinuierlich, kontinuierlich oder im Zulaufverfahren innerhalb des Temperaturbereichs von 10 bis 150°C durchführt.

5. Gemäß Anspruch 1 bis 4 erhältliche Dispersionen.

6. Verwendung der gemäß Anspruch 1 bis 4 erhältlichen Dispersionen zur Herstellung von Beschichtungen auf beliebigen Substraten.

**Claims**

1. A process for the production of aqueous dispersions of polymers by polymerization of olefinically unsaturated monomers in aqueous medium in the presence of radical formers and using hydrophilically modified emulsifiers containing urethane groups and having a molecular weight below 30,000, characterized in that the emulsifiers containing urethane groups are oligourethanes having a branched molecular structure which
(i) have been prepared from organic polyisocyanates (a) and organic compounds containing isocyanate-reactive groups (b) and optionally other compounds containing isocyanate groups or isocyanate-reactive groups using synthesis components (c) containing hydrophilic groups or potentially hydrophilic groups and having a functionality of one or, optionally, two in the context of the isocyanate addition reaction with optionally subsequent conversion of potentially hydrophilic groups into hydrophilic groups, with the proviso

that components (a) and/or (b) having a functionality of more than two in the context of the isocyanate addition reaction are used ; where difunctional synthesis components (c) are used, the molar ratio of the monofunctional (potentially) hydrophilic synthesis components (a) to the corresponding difunctional synthesis components (c) is at least 2 : 1,
and which
(ii) have a content—sufficient to guarantee solubility or dispersibility in water—of chemically incorporated hydrophilic centres of which all or most are terminally positioned, with the proviso that, on a statistical average, at least 2.2 terminally incorporated hydrophilic groups are present per molecule.

2. A process as claimed in claim 1, characterized in that the oligourethanes used as emulsifiers contain 7.3 to 400 milliequivalents per 100 g terminally incorporated carboxylate groups.

3. A process as claimed in claims 1 and 2, characterized in that the ratio by weight of the olefinically unsaturated monomers to the oligourethanes used as emulsifiers is from 1 : 1 to 99 : 1.

4. A process as claimed in claims 1 to 3, characterized in that the polymerization reaction is carried out discontinuously, continuously or by the inflow method at a temperature in the range from 10 to 150°C.

5. Dispersions obtainable by the process claimed in claims 1 to 4.

6. The use of the dispersions obtainable by the process claimed in claims 1 to 4 for the production of coatings on substrates.

## Revendications

1. Procédé de préparation de dispersions aqueuses de polymères par polymérisation de monomères à insaturation oléfinique en milieu aqueux en présence d'inducteurs radicalaires avec utilisation d'agents émulsionnants contenant des groupes uréthanne, à modification hydrophile, d'un poids moléculaire moyen inférieur à 30000, caractérisé en ce que l'on utilise en tant qu'agents émulsionnants contenant des groupes uréthanne des oligo-uréthannes à structure moléculaire ramifiée.
(i) qui ont été préparés à partir de polyisocyanates organiques (a) et de composés organiques contenant des groupes réactifs avec les groupes isocyanate (b) et le cas échéant d'autres composés contenant des groupes isocyanate ou des groupes réactifs avec les groupes isocyanate, avec utilisation conjointe de composants de synthèse (c) contenant des groupes hydrophiles ou des groupes convertibles en groupes hydrophiles, mono- et éventuellement difonctionnels au sens de la réaction d'addition des isocyanates, et le cas échéant conversion subséquente des groupes hydrophiles potentiels en groupes hydrophiles, sous réserve que l'on utilise conjointement des composants (a) et/ou (b) qui, au sens de la réaction d'addition des isocyanates, ont une fonctionnalité supérieure à 2, et, dans le cas où on utilise conjointement des composants de synthèse (c) difonctionnels, le rapport molaire entre les composants de synthèse (c) hydrophiles (potentiels) monofonctionnels et les composants de synthèse (c) difonctionnels correspondants est d'au moins 2 : 1, et
(ii) contiennent des centres hydrophiles combinés chimiquement à une teneur assurant la solubilité ou la dispersabilité dans l'eau, ces centres hydrophiles étant disposés exclusivement ou en proportions prépondérantes dans les positions terminales, sous réserve qu'il y ait en moyenne statistique au moins 2,2 groupements hydrophiles dans les positions terminales par molécule.

2. Procédé selon la revendication 1, caractérisé en ce que les oligo-uréthannes utilisés comme agents émulsionnants contiennent de 7,3 à 400 milliéquivalents de groupes carboxylate en position terminale pour 100 g.

3. Procédé selon les revendications 1 et 2, caractérisé en ce que le rapport en poids entre les monomères à insaturation oléfinique et les oligo-uréthannes utilisés en tant qu'agents émulsionnants est de 1 : 1 à 99 : 1.

4. Procédé selon les revendications 1 à 3, caractérisé en ce que l'on effectue la réaction de polymérisation en discontinu, en continu ou avec alimentation continue, dans l'intervalle de température de 10 à 150°C.

5. Les dispersions obtenues selon les revendications 1 à 4.

6. Utilisation des dispersions obtenues selon les revendications 1 à 4, pour l'application de revêtements sur des supports quelconques.